# EUROPÄISCHE PATENTSCHRIFT

(11) **EP 0 989 024 B1**
(45) Veröffentlichungstag und Bekanntmachung des Hinweises auf die Patenterteilung: **12.07.2006**
(21) Anmeldenummer: 99118338.5
(22) Anmeldetag: 16.09.1999
(51) Int. Cl.: B60Q 1/115

(54) **Verfahren zur Regelung der Leuchtweite von Fahrzeugscheinwerfern**
System for controlling the headlight beam of a vehicle
Procédé de réglage de la portée des phares d'un véhicule

(30) Priorität: 22.09.1998 DE 19843388
(43) Veröffentlichungstag der Anmeldung: 29.03.2000
(73) Patentinhaber: Hella KGaA Hueck & Co., 59552 Lippstadt (DE)
(72) Erfinder: Lammers, Christian, 59494 Soest (DE); Marek, Karsten, 45661 Recklinghausen (DE)

(56) Entgegenhaltungen:
- EP-A- 0 652 134
- DE-A- 4 202 908
- DE-A- 19 628 405
- DE-A- 19 632 206
- DE-A- 19 703 665
- GB-A- 2 309 774

## Beschreibung

Die Erfindung betrifft ein Verfahren zur Regelung der Leuchtweite von Fahrzeugscheinwerfern, bei dem ein die Lage des Fahrzeugs zur Fahrbahn wiedergebendes Sensorsignal gebildet wird, aus dem Sensorsignal ein Sollwertsignal zur Ansteuerung einer Einstellvorrichtung der Scheinwerfer erzeugt wird und die Leuchtweite der Scheinwerfer auf einen dem Sollwert entsprechenden Wert geregelt oder eingestellt wird.

Aus der Europäischen Patentanmeldung EP 0 355 539 A2 (Oberberitft von Anspruch 1) ist ein Verfahren zur Regelung der Leuchtweite eines Fahrzeugs bekannt, bei dem ein die Lage des Fahrzeugs zur Fahrbahn wiedergebendes Sensorsignal gebildet wird. Hierzu weist das Fahrzeug mindestens einen Fahrzeugniveaugeber auf, der an mindestens einer der Achsen des Fahrzeugs montiert sein kann und unterschiedliche Funktionsprinzipien zur Erzeugung des Sensorsignals aufweisen kann. Bei dem bekannten Verfahren werden zwei Fahrzeugniveausensoren verwendet, die vorteilhafterweise an der Vorder- und Hinterachse des Fahrzeugs angeordnet sind, um die Sensorsignale zu erzeugen. Aus den Sensorsignalen wird ein Differenzsignal gebildet, welches über einen Filter einer Mittelwertbildung unterzogen wird, um einen Sollwert zur Ansteuerung der Scheinwerfer bereitzustellen. Die Mittelwertbildung der Differenzsignale wird dabei durch auftretende Beschleunigungssignale des Fahrzeugs beeinflußt. Bei dem vorbekannten Verfahren werden die an dem Ausgang des Filters vorliegenden Sollwertsignale zur Ansteuerung der Scheinwerfer Ansteuermotoren zugeführt, die die Leuchtweite der Scheinwerfer auf einen dem Sollwert entsprechenden Wert regeln oder einstellen.

Bei dem bekannten Verfahren hat sich jedoch als nachteilig erwiesen, daß, wenn ein Achssensor einen Defekt aufweist, gefährliche Situationen bei dem Betrieb des Fahrzeugs dadurch entstehen können, daß die Scheinwerfer aufgrund fehlerhafter Sensorsignale auf eine Leuchtweite eingestellt werden, die entweder zu einer Blendung des Gegenverkehrs führen oder aber die Sichtweite des Fahrers extrem einschränken. Solche Fehler können zum Beispiel auftreten, wenn ein Fahrzeugniveausensor nach beliebigem Konstruktionsprinzip trotz Lageänderung des Fahrzeugs zur Fahrbahn nur ein konstantes Sensorsignal ausgibt.

Der Erfindung liegt somit die Aufgabe zugrunde sicherzustellen, daß fehlerhafte Sensorsignale von defekten Fahrzeugniveaugebem nicht zu Fehleinstellungen der Leuchtweite der Scheinwerfer führen.

Die Aufgabe wird erfindungsgemäß durch die Merkmale des Anspruchs 1 gelöst.

Es ist von Vorteil, daß das Sensorsignal in Abhängigkeit von einer dynamischen Größe, die die Lage des Fahrzeugs zur Fahrbahn beeinflußt, auf seine Funktionsfähigkeit überprüft wird, weil somit sichergestellt wird, daß bei dem Vorliegen von dynamischen Bewegungen des Fahrzeugs erkannt wird, daß ein Fahrzeugniveaugeber keine den dynamischen Bewegungen des Fahrzeugs entsprechenden Sensorsignale erzeugt.

In diesem Zusammenhang hat es sich als vorteilhaft erwiesen, als dynamische Größe die Geschwindigkeit, die Beschleunigung und/oder die Beschleunigungsänderung des Fahrzeugs heranzuziehen.

Dadurch daß ein Fehlersignal erzeugt wird, wenn die dynamische Größe einen vorgegebenen Schwellwert überschreitet, das Sensorsignal einen vorgegebenen Schwellwert für die Änderung des Sensorsignals jedoch nicht überschreitet, ergibt sich eine besonders einfache Möglichkeit, ein fehlerhaftes Sensorsignal zu detektieren, dieses zur Anzeige zu bringen und Gegenmaßnahmen einzuleiten.

Es ist von Vorteil, daß zur Überprüfung der Funktionsfähigkeit des Sensorsignals dieses parallel mit einer schnellen Filterzeit und mit einer langsamen Filterzeit gefiltert wird und anschließend mittels Differenzbildung der gefilterten Signale ein Sensordifferenzsignal gebildet wird, weil auf diese einfache Art und Weise zum einen sichergestellt wird, daß hochfrequente Störungen des Sensorsignales eliminiert werden und zudem parallel ein gefiltertes Sensorsignal vorliegt, das ein Langzeitmittelwert des Sensorsignals bestmöglich widerspiegelt. Dadurch daß anschließend mittels Differenzbildung der gefilterten Signale ein Sensordifferenzsignal gebildet wird, ergibt sich der Vorteil, daß mit dem Sensordifferenzsignal ein Referenzsignal für die Überprüfung der Funktionsfähigkeit der Sensorsignale zur Verfügung steht.

Es ist von Vorteil, daß neben einer Bedingung für die Geschwindigkeit des Fahrzeugs bei dem Prüfverfahren auch eine Bedingung für die Beschleunigung des Fahrzeugs Anwendung findet, bevor ein Fehlersignal erzeugt wird, weil somit mit hoher Sicherheit festgestellt werden kann, daß das Sensorsignal auf die die Lage des Fahrzeugs zur Fahrbahn beeinflussenden dynamischen Größen keine äquivalenten Werte aufweist.

Zur weiteren Erhöhung der Sicherheit bei der Erkennung eines Fehlers hat sich als vorteilhaft erwiesen, daß zusätzlich ermittelt wird, ob eine vorgegebene Beschleunigungsimpulsbreite bei den detektierten Beschleunigungsvorgängen des Fahrzeugs überschritten wird. Des weiteren hat sich als vorteilhaft erwiesen, nicht unmittelbar ein Fehlersignal auszugeben, sondern bei Detektion eines Fehlers eine Nachlaufzeit zu aktivieren, über die Fehler aufsummiert werden können, und erst nach Ablauf der Nachlaufzeit ein Fehlersignal zu erzeugen. Des weiteren hat es sich als vorteilhaft erwiesen, einen positiven bzw. negativen Auswertezähler zu verwenden, damit Fehlersignale bis zu einer gewissen Grenze gezählt werden können bzw., bei korrekter Funktion des Systems und der Detektion einer vorgegebenen Anzahl von positiven Rückmeldungen, der negative Auswertezähler zurückgesetzt werden kann.

Ein weiterer Vorteil ergibt sich daraus, daß z. B. nach Inbetriebnahme des Fahrzeugs bzw. nach Inbetriebnahme der Leuchtweitenregelung und Abschluß einer Standardprüfung eine Vorlaufzeit aktiviert wird, die abgewartet wird, bevor das Prüfverfahren gestartet wird, um sicherzustellen, daß der Langzeitmittelwert des Sensorsignales, der Grundlage für die Prüfung ist, korrekt vorliegt.

Des weiteren erweist sich als vorteilhaft, wenn die Scheinwerfer bei Erzeugung eines Fehlersignales in eine Sicherheitsposition verstellt werden, die sicherstellt, daß der Gegenverkehr nicht geblendet wird und dem Fahrer des Fahrzeugs eine ausreichende Sichtweite verbleibt. Zudem kann es sich als vorteilhaft erweisen, ein Warnsignal zu erzeugen, das sowohl zur Warnung des Fahrers dienen kann als auch in einem Diagnosesystem festgeschrieben werden kann.

Es folgt eine kurze Beschreibung eines Ausführungsbeispiels des Erfindungsgegenstandes.

Es zeigen:
Figur 1: ein Ablaufschema zur Erzeugung eines Sensordifferenzsignales
Figur 2: die Komponentenstruktur zur Erzeugung eines Fehlersignales

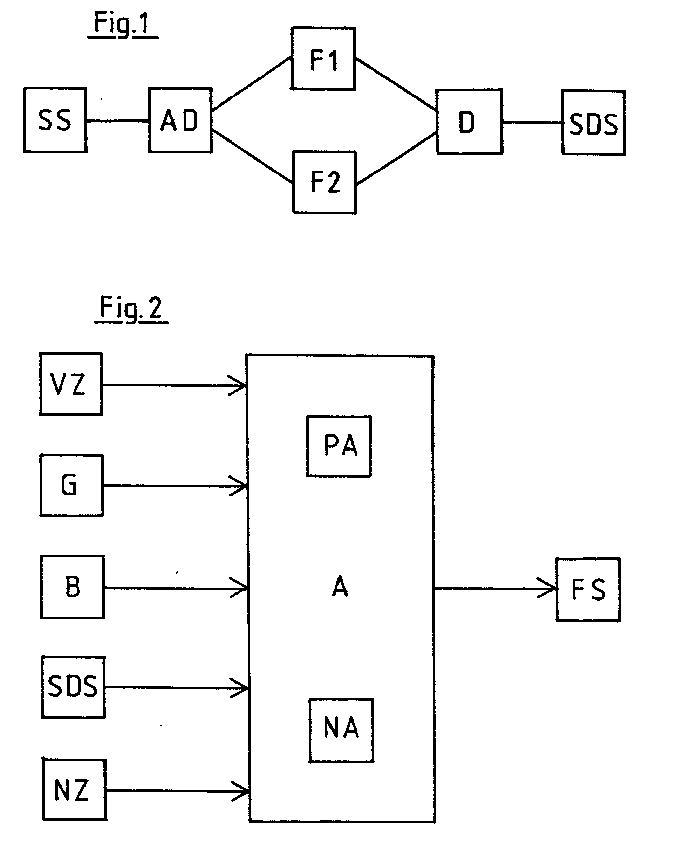

Figur 1 ist beispielhaft die Erzeugung eines Sensordifferenzsignales zu entnehmen. Bei einem Verfahren zur Regelung der Leuchtweite von Fahrzeugscheinwerfem kommt mindestens ein Fahrzeugniveausensor zum Einsatz, der Sensorsignale (SS) erzeugt, die die Lage des Fahrzeugs zur Fahrbahn wiedergeben. Je nach Art des Fahrzeugniveaugebers können diese Sensorsignale (SS) analoge oder digitale Signale sein. Bei dem hier gezeigten Ausführungsbeispiel sind die Sensorsignale (SS) analoge Signale und werden daher durch eine Analog/Digital-Wandlung (AD) in digitale Sensorsignale (SS) umgesetzt. Die digitalen Sensorsignale (SS) werden parallel einer ersten Filterung (F1) und einer zweiten Filterung (F2) unterzogen. Die erste Filterung (F1) beruht dabei auf einer schnellen Filterzeit in der Größenordnung von einigen hundert Millisekunden und die zweite Filterung (F2) erfolgt mit einer langsamen Filterzeit in der Größenordnung von einigen zehn Sekunden. Aufgrund der zweiten Filterung (F2) wird somit ein Langzeitmittelwert des Sensorsignales (SS) erzeugt, und durch die erste Filterung (F1) werden Störungen des Sensorsignales (SS) aus dem Signal herausgefiltert. Die gefilterten Sensorsignale werden einer Differenzbildung (D) unterzogen, deren Ergebnis ein Sensordifferenzsignal (SDS) ist. Dieses Sensordifferenzsignal (SDS) ermöglicht aufgrund seiner Schwankungen im Vergleich zu dynamischen Bewegungen des Fahrzeugs, eine Aussage über die Funktionsfähigkeit des Sensorsignals (SS) und damit des Fahrzeugniveaugebers zu erlangen.

In Figur 2 ist ein Diagramm gezeigt, in deren Mittelpunkt eine Auswertung (A) angeordnet ist, der unterschiedliche Eingangswerte zugeführt werden. Diese Eingangswerte sind das Sensordifferenzsignal (SDS), die Geschwindigkeit (G) des Fahrzeugs, die Beschleunigung (B) des Fahrzeugs, eine Vorlaufzeit (VZ) und eine Nachlaufzeit (NZ). Die Auswertung (A) verfügt des weiteren über einen positiven Auswertezähler (PA) und einen negativen Auswertezähler (NA). Am Ausgang der Auswertung (A) erfolgt, falls notwendig, die Ausgabe eines Fehlersignales (FS).

Im folgenden wird kurz der Ablauf des Prüfverfahrens beschrieben. Damit sichergestellt wird, daß nach Inbetriebnahme der Leuchtweitenregelung durch die zweite Filterung (F2) ein stabilisiertes Langzeitmittel des Sensorsignales gebildet worden ist, wird vor Beginn des Prüfablaufes der Ablauf der Vorlaufzeit (VZ) abgewartet. Ist die Vorlaufzeit (VZ) abgelaufen, wird geprüft, ob die Geschwindigkeit (G) des Fahrzeugs einen vorgegebenen Geschwindigkeitsschwellwert überschritten hat. Das Geschwindigkeitssignal wird dabei in üblicher Weise aus im Fahrzeug vorliegenden Daten erzeugt. Hat die Geschwindigkeit (G) des Fahrzeugs den Geschwindigkeitsschwellwert überschritten, wird geprüft, ob das Sensordifferenzsignal (SDS) einen vorgegebenen Sensordifferenzsignalschwellwert überschritten hat. Ist dies nicht der Fall, wird als zusätzliche Plausibilitätsbedingung geprüft, ob die Beschleunigung (B) des Fahrzeugs einen vorgegebenen Beschleunigungsschwellwert überschritten hat. Trifft dies zu, wird zusätzlich geprüft, ob eine vorgegebene Beschleunigungsimpulsbreite überschritten wurde. Hierbei geht man davon aus, daß, wenn die Beschleunigung (B) und die Beschleunigungsimpulsbreite einen bestimmten Schwellwert überschreiten, Achssensorbewegungen oberhalb der bestehenden Achssensorhysterese vorhanden sein müssen.

Des weiteren wird eine Nachlaufzeit (NZ) aktiviert, die der Verbesserung der Systemsicherheit dient. Diese Nachlaufzeit (NZ) wird initialisiert, wenn die vorherigen Parameter überschritten wurden, und definiert eine gewisse Zeitverzögerung bis zur Erzeugung eines Fehlersignales. Zudem wird ein negativer Auswertezähler (NA) aktiviert, mit dem eine gewisse Anzahl Fehler registriert werden können. Hierdurch wird erreicht, daß nicht beim ersten Erkennen eines Fehlers ein Fehlersignal ausgegeben wird, sondern erst, wenn ein Fehler mehrmals aufgetreten ist. Wird die vorgegebene Anzahl an Fehlern in dem negativen Auswertezähler (NA) überschritten, erfolgt die Ausgabe eines Fehlersignales (FS). Eine Verbesserung der Systemsicherheit wird erreicht, wenn neben dem negativen Auswertezähler (NA) ein positiver Auswertezähler (PA) eingeführt wird. Werden bei den Prüfzyklen über einen gewissen Zeitraum Sensordifferenzsignale (SDS) detektiert, die die Prüfbedingungen einhalten, wird dieser positive Auswertezähler (PA) gesetzt, und bei Erreichen einer vorgegebenen Anzahl von positiven Zählungen wird der negative Auswertezähler (NA) zurückgesetzt. Man geht dabei davon aus, daß die Funktionsfähigkeit der Sensorsignale (SS) nach einer vorliegenden Störung wiederhergestellt worden ist.

### Bezugszeichenliste

### Verfahren zur Regelung der Leuchtweite von Fahrzeugscheinwerfem

- A: Auswertung
- AD: Analog/Digital-Wandlung
- B: Beschleunigung
- D: Differenzbildung
- F1: erste Filterung
- F2: zweite Filterung
- FS: Fehlersignal
- G: Geschwindigkeit
- NA: negativer Auswertezähler
- NZ: Nachlaufzeit
- PA: positiver Auswertezähler
- SDS: Sensordifferenzsignal
- SS: Sensorsignal
- VZ: Vorlaufzeit

## Patentansprüche

1. Verfahren zur Regelung der Leuchtweite von Fahrzeugscheinwerfern, bei dem
- ein die Lage des Fahrzeugs zur Fahrbahn wiedergebendes Sensorsignal gebildet wird;
- aus dem Sensorsignal ein Sollwertsignal zur Ansteuerung einer Einstelleinrichtung der Scheinwerfer erzeugt wird und
- die Leuchtweite des Scheinwerfers auf einen dem Sollwert entsprechenden Wert geregelt oder eingestellt wird,**dadurch gekennzeichnet, daß** das Sensorsignal in Abhängigkeit von einer dynamischen Größe, die die Lage des Fahrzeugs zur Fahrbahn beeinflußt, auf seine Funktionsfähigkeit überprüft wird.

2. Verfahren nach Anspruch 1, **dadurch gekennzeichnet, daß** die dynamische Größe die Geschwindigkeit des Fahrzeugs ist.

3. Verfahren nach Anspruch 1, **dadurch gekennzeichnet, daß** die dynamische Größe die Beschleunigung des Fahrzeugs ist.

4. Verfahren nach Anspruch 1, **dadurch gekennzeichnet, daß** die dynamische Größe die Beschleunigungsänderung des Fahrzeugs ist.

5. Verfahren nach Anspruch 4, **dadurch gekennzeichnet, daß** ein Fehlersignal erzeugt wird, wenn die dynamische Größe einen vorgegebenen Schwellwert überschreitet, das Sensorsignal einen vorgegebenen Schwellwert für die Änderung des Sensorsignals jedoch nicht überschreitet.

6. Verfahren nach Anspruch 5, **dadurch gekennzeichnet, daß** zur Überprüfung der Funktionsfähigkeit des Sensorsignals dieses parallel mit einer schnellen Filterzeit und einer langsamen Filterzeit gefiltert wird und anschließend mittels Differenzbildung der gefilterten Signale ein Sensordifferenzsignal gebildet wird.

7. Verfahren nach Anspruch 6, **dadurch gekennzeichnet, daß** das Sensorsignal vor der Filterung einer Analog/Digital-Wandlung unterzogen wird.

8. Verfahren nach Anspruch 6 oder Anspruch 7, **gekennzeichnet durch** die folgenden Schritte:
- Ermittlung, ob die Geschwindigkeit des Fahrzeugs einen vorgegebenen Geschwindigkeitsschwellwert überschreitet;
- Ermittlung, ob das Sensordifferenzsignal einen vorgegebenen Sensordifferenzsignalschwellwert überschritten hat, falls der vorgegebene Geschwindigkeitsschwellwert für die Geschwindigkeit überschritten wurde;
- Ermittlung, ob die Beschleunigung des Fahrzeugs einen vorgegebenen Beschleunigungsschwellwert überschritten hat, falls das Sensordifferenzsignal den vorgegebenen Sensordifferenzsignalschwellwert nicht überschritten hat;
- Erzeugung eines Fehlersignals, falls der Beschleunigungsschwellwert überschritten wurde.

9. Verfahren nach Anspruch 8, **gekennzeichnet durch** folgende zusätzliche Schritte, bevor ein Fehlersignal erzeugt wird:
- Ermittlung, ob eine vorgegebene Beschleunigungsimpulsbreite überschritten wird;
- Aktivierung einer Nachlaufzeit, über die die Verfahrensschritte zur Prüfung wiederholt werden;
- Setzen bzw. Löschen eines positiven bzw. negativen Auswertezählers zur Einhaltung bzw. Verletzung der Prüfbedingungen und Erzeugung eines Fehlersignales nach Ablauf der Nachlaufzeit, wenn der vorgegebene Maximalwert des negativen Auswertezählers überschritten ist.

10. Verfahren nach Anspruch 9, **dadurch gekennzeichnet, daß**, bevor das Prüfverfahren anläuft, eine Vorlaufzeit abgewartet wird.

11. Verfahren nach mindestens einem der vorstehenden Ansprüche, **dadurch gekennzeichnet, daß** bei Erzeugung eines Fehlersignales die Scheinwerfer in eine Sicherheitsposition verstellt werden und/oder ein Warnsignal erzeugt wird.

## Claims

1. Method for controlling the headlight beam of a motor vehicle, wherein
- a sensor signal reproducing the position of the vehicle relative to the road surface is generated;
- a setpoint signal is generated from the sensor signal for actuating a headlight adjusting device, and
- the headlight beam is controlled or set to a value corresponding to the setpoint, **characterised in that** the sensor signal is checked for its functionality, depending on the dynamic value which influences the position of the vehicle relative to the road surface.

2. Method according to Claim 1, **characterised in that** the dynamic value is the speed of the vehicle.

3. Method according to Claim 1, **characterised in that** the dynamic value is the acceleration of the vehicle.

4. Method according to Claim 1, **characterised in that** the dynamic value is the variation in acceleration of the vehicle.

5. Method according to Claim 4, **characterised in that** an error signal is generated when the dynamic value exceeds a predetermined threshold value, but the sensor signal does not exceed a predetermined threshold value for the variation in the sensor signal.

6. Method according to Claim 5, **characterised in that** in order check the functionality of the sensor signal, it is filtered parallel with a fast filter time and a slow filter time in parallel and a sensor differential signal is then formed by means of differentiation of the filtered signals.

7. Method according to Claim 6, **characterised in that** the sensor signal is subjected to an analogue/digital conversion before filtering.

8. Method according to Claim 6 or Claim 7, **characterised by** the following steps:
- determination of whether the speed of the vehicle exceeds a predetermined threshold speed value;
- determination as to whether the sensor differential signal has exceeded a predetermined sensor differential signal threshold value if the predetermined threshold speed value for the speed;
- determination as to whether the acceleration of the vehicle has exceeded a predetermined threshold acceleration value if the sensor differential signal has not exceeded the predetermined sensor differential signal value;
- generation of an error signal of the threshold acceleration value has been exceeded.

9. Method according to Claim 8, **characterised by** the following additional steps before an error signal is generated:
- determination as to whether a predetermined acceleration pulse width is exceeded;
- activation of an after-running time during which the method steps are repeated for testing;
- setting or deleting a positive or negative evaluation counter to comply with or infringe the test conditions and generate an error signal after the end of the after-running time if the predetermined maximum value of the negative evaluation counter has been exceeded.

10. Method according to Claim 9, **characterised in that** a pre-running time is allowed to expire before the test method commences.

11. Method according to at least one of the preceding claims, **characterised in that** when an error signal is generated the headlights are adjusted to a safety position and/or a warning signal is generated.

## Revendications

1. Procédé de réglage de la portée des projecteurs de véhicules, dans lequel
- est délivré un signal de capteur reproduisant la position du véhicule par rapport à la route;
- un signal de valeur de consigne est généré à partir du signal de capteur pour activer un dispositif de réglage des projecteurs et
- la portée des projecteurs est réglée ou ajustée à une valeur correspondant à la valeur de consigne ;
**caractérisé en ce que** le fonctionnement correct du signal de capteur est contrôlé en fonction d'une grandeur dynamique qui influe sur la position du véhicule par rapport à la route.

2. Procédé selon la revendication 1, **caractérisé en ce que** la grandeur dynamique est la vitesse du véhicule.

3. Procédé selon la revendication 1, **caractérisé en ce que** la grandeur dynamique est l'accélération du véhicule.

4. Procédé selon la revendication 1, **caractérisé en ce que** la grandeur dynamique est la variation de l'accélération du véhicule.

5. Procédé selon la revendication 4, **caractérisé en ce qu'**un signal d'erreur est généré lorsque la grandeur dynamique est supérieure à une valeur seuil prédéfinie, mais le signal de capteur ne dépasse pas une valeur seuil prédéfinie pour la variation du signal de capteur.

6. Procédé selon la revendication 5, **caractérisé en ce que**, pour le contrôle du fonctionnement correct du signal de capteur, celui-ci est filtré en parallèle avec un temps de filtrage court et avec un temps de filtrage long et ensuite, à partir de la différence formée entre les signaux filtrés, est généré un signal de différence du capteur.

7. Procédé selon la revendication 6, **caractérisé en ce que** le signal de capteur est soumis à une conversion analogique/numérique avant le filtrage.

8. Procédé selon la revendication 6 ou 7, **caractérisé par** les étapes suivantes :
- détermination si la vitesse du véhicule est supérieure à une valeur seuil de vitesse prédéfinie ;
- détermination si le signal de différence du capteur dépasse une valeur seuil du signal de différence du capteur, au cas où la vitesse serait supérieure à la valeur seuil prédéfinie pour la vitesse ;
- détermination si l'accélération du véhicule est supérieure à une valeur seuil d'accélération prédéfinie, au cas où le signal de différence du capteur ne serait pas supérieur à la valeur seuil prédéfinie pour le signal de différence du capteur ;
- formation d'un signal d'erreur, au cas où la valeur seuil d'accélération n'était pas dépassée.

9. Procédé selon la revendication 8, **caractérisé par** les étapes supplémentaires suivantes, avant qu'un signal d'erreur ne soit généré :
- détermination si une largeur d'impulsion d'accélération prédéfinie est dépassée ;
- activation d'un temps de poursuite, pendant lequel les étapes du procédé de contrôle sont répétées ;
- initialisation et remise à zéro d'un compteur d'analyse positif et négatif pour le respect ou le non-respect des conditions de contrôle ; et
- formation d'un signal d'erreur après l'écoulement du temps de poursuite, lorsque la valeur maximale prédéfinie du compteur d'analyse négatif est dépassée.

10. Procédé selon la revendication 9, **caractérisé en ce que** le procédé de contrôle commence seulement lorsqu'un temps de mise en route s'est écoulé.

11. Procédé selon au moins l'une quelconque des revendications précédentes, **caractérisé en ce que**, lorsqu'un signal d'erreur est généré, les projecteurs sont réglés dans une position de sécurité et/ou un signal d'alarme est généré.
